# EUROPÄISCHE PATENTSCHRIFT

(11) **EP 2 689 531 B1**
(45) Veröffentlichungstag und Bekanntmachung des Hinweises auf die Patenterteilung: **02.06.2021**
(21) Anmeldenummer: 12714528.2
(22) Anmeldetag: 23.03.2012
(51) Int. Cl.: F03B 3/10, H02P 29/02, F03B 13/06

(54) **PUMPSPEICHERANLAGE**
PUMPED STORAGE PLANT
SYSTÈME D'ACCUMULATION PAR POMPAGE

(30) Priorität: 25.03.2011 AT 4262011
(43) Veröffentlichungstag der Anmeldung: 29.01.2014
(73) Patentinhaber: Technische Universität Wien, 1040 Wien (AT)
(72) Erfinder: BAUER, Christian, A-1230 Wien (AT); DOUJAK, Eduard, A-1220 Wien (AT)
(74) Vertreter: Sonn & Partner Patentanwälte
(86) Internationale Anmeldenummer: PCT/AT2012/000077
(87) Internationale Veröffentlichungsnummer: WO 2012/129581

(56) Entgegenhaltungen:
- EP-A2- 1 130 764
- EP-A2- 1 523 088
- DE-A1- 2 623 659
- DE-A1- 10 210 099
- DE-A1-102004 013 907
- DE-A1-102009 026 324
- ES-A1- 2 353 782
- US-A1- 2006 056 572
- US-A1- 2010 133 816

## Beschreibung

Die Erfindung betrifft eine Pumpspeicheranlage mit einer zwischen einem Pumpbetrieb und einem Generatorbetrieb umschaltbaren Pumpturbine, die mehrere in Strömungsrichtung aneinander anschließende, mit einer gemeinsamen Welle verbundene Pumpturbinenmodule aufweist, und mit einer mit der Welle gekoppelten Motor-Generator-Maschine, die mit einer Frequenzumrichtereinheit zur Drehzahlsteuerung bzw. -regelung der Motor-Generator-Maschine verbunden ist.

Zur Bewältigung der aktuellen Herausforderungen in der Energieversorgung ist es erforderlich, den Anteil des Stroms aus erneuerbaren Energiequellen (Wind, Wasser, Sonne, Biomasse und Geothermie) wesentlich zu erhöhen. Hierdurch wird jedoch ein wachsender Anteil der Stromerzeugung schwer vorhersehbar. Pumpspeicherkraftwerke können einen Beitrag zum Ausgleich von Schwankungen zwischen verfügbarem und nachgefragtem Strom leisten. In Zeiten niedrigen Strombedarfs wird überschüssige Energie effizient gespeichert, indem Wasser aus einem Unterwasserbecken in ein Oberwasserbecken gepumpt wird; zur Abdeckung von Spitzenlasten wird aus der potentiellen Energie des hochgepumpten Wassers elektrische Energie gewonnen. Hierfür kann eine reversible, in beide Richtungen durchströmbare Pumpturbine verwendet werden, welche zwischen einem Pumpbetrieb und einem Turbinenbetrieb umschaltbar ist. Die Pumpturbine ist mit einer Motor-Generator-Maschine verbunden, welche je nach Betriebsmodus als Motor bzw. als Generator arbeitet. In jüngster Zeit wurden große Anstrengungen unternommen, dezentrale Pumpspeicheranlagen zu entwickeln, welche mit vorhandenen Netzen betrieben werden können. Ein wesentlicher Vorteil dezentraler Pumpspeicheranlagen liegt in der Abdeckung des Strombedarfs in örtlicher Nähe zum Verbraucher, wodurch die Stromnetze entlastet werden können. Die Anforderungen an die dezentralen Pumpspeicheranlagen können sich je nach Einsatzort beträchtlich unterscheiden; die Dimensionierung der Anlage hängt dabei insbesondere von dem Speichervolumen und der Fallhöhe zwischen Ober- und Unterwasserbecken ab. Zudem werden dezentrale Pumpspeicheranlagen vielfach an entlegenen Orten installiert. In der Praxis wird üblicherweise für jeden Einsatzort eine speziell angepasste Lösung entwickelt, was jedoch nachteiligerweise mit hohen Kosten verbunden ist.

Um Pumpspeicheranlagen an unterschiedliche Randbedingungen anpassen zu können, wurden bereits mehrstufige Pumpturbinen eingesetzt, welche eine effiziente Ausnutzung der verfügbaren Wassermenge ermöglichen. Eine derartige Pumpturbine weist mehrere aneinander anschließende Pumpstufen bzw. Pumpturbinenmodule auf, welche mit einer gemeinsamen Hauptwelle gekoppelt sind. Hierdurch kann der Einsatzbereich der Pumpspeicheranlage erweitert werden. Eine mehrstufige Pumpturbine ist beispielsweise aus der AT 319 868 bekannt, deren Inhalt hiermit durch Bezugnahme aufgenommen ist.

Die Motor-Generator-Maschine wird in bekannten Pumpspeicheranlagen üblicherweise als elektrisch erregte Drehstrommaschine (Synchron- oder Asynchronmaschine) ausgeführt, die direkt an das Stromnetz angeschlossen wird. Demnach arbeitet die Motor-Generator-Maschine mit der durch die Konstruktion und die Netzfrequenz vorgegebenen konstanten Drehzahl. Im Fall von Asynchronmaschinen ist durch den belastungsabhängigen Schlupf eine geringfügige Drehzahlvariation gegeben. Da Pumpturbinen als Pumpen ausgelegt werden, erreichen sie bei gleicher Drehzahl im Turbinenbetrieb nicht den optimalen Wirkungsgrad. Um den Wirkungsgrad im Turbinenbetrieb zu verbessern, wurden bereits drehzahlgeregelte Anlagen errichtet. Ein Beispiel hierfür ist das Pumpspeicherkraftwerk Goldisthal in Deutschland, das bei einer Antriebsleistung von ca. 300 Megawatt betrieben wird. Der Maschinensatz verfügt dabei über eine doppeltgespeiste Asynchronmaschine, die mit einem rotorseitigen Frequenzumrichter verbunden ist. Der Frequenzumrichter ermöglicht eine Drehzahlregelung in einem vergleichsweise schmalen Regelbereich um die Nenndrehzahl (zwischen ca. - 10% und +4% relativ zur Nenndrehzahl).

Die Drehzahlvariabilität der Motor-Generator-Maschine der Pumpspeicheranlage richtet sich vorrangig nach der Leistung des verwendeten Frequenzumrichters. Die Leistungselektronik von Frequenzumrichtern stellt jedoch mit steigenden Anforderungen an die Leistung einen beträchtlichen Kostenfaktor dar. Somit wird die Drehzahlregelung üblicherweise auf einen engen Bereich beschränkt. Um eine größere Drehzahlvariabilität zu erzielen, könnte grundsätzlich ein speziell angepasster Hochleistungs-Frequenzumrichter verwendet werden, weleher jedoch mit hohem konstruktiven und finanziellen Aufwand verbunden ist. Die Kosten für derartige Leistungselektronik sind jedoch insbesondere für kleinere Pumpspeicheranlagen nicht zu rechtfertigen.

Die DE 10 2004 013907 A1 zeigt eine andersartige Speicherkraftwerksanlage, welche an einer gemeinsamen Welle wenigstens eine Turbine, wenigstens einen zugehörigen Motorgenerator sowie wenigstens eine Pump aufweist. Da das Stromnetz selbst keine Energie speichern kann, muss die vom Netz an die Verbraucher abgegebene Leistung immer mit der in dem Kraftwerk erzeugten Leistung im Gleichgewicht sein. Um Leistungsänderungen bei gleichzeitiger Einhaltung der Netzfrequenz zu kompensieren, ist bei diesem Stand der Technik eine Leistungsregelung vorgesehen. Hierbei wird die Leistungsanforderung des Stromnetzes überwacht. Bei Netz-Leistungsbedarf wird mit Hilfe der Turbine und des Motorgenerators erzeugter Strom unter Leistungsregelung an das Stromnetz geliefert. Bei Leistungsüberschuss im Stromnetz wird Strom aus dem Stromnetz bezogen, um die Pumpe zum Hochpumpen von Wasser aus einem Unter- in ein Oberbecken zu nutzen. Die Leistungsregelung beruht darauf, dass Pump- und Turbinenbetrieb gleichzeitig gefahren wird ("hydraulischer Kurzschluss"). Damit kann geregelt Leistung vom Netz aufgenommen werden.

Aus der DE 102 10 099 A1 ist weiters ein andersartiges Inselnetz bekannt. In einer Ausführungsform sind drei Windenergieanlagen mit ersten Generatoren vorgesehen, die jeweils an einen Gleichrichter angeschlossen sind. Die Gleichrichter sind an der Ausgangsseite parallel geschaltet und speisen die von den Windenergieanlagen erzeugte Energie in einen Gleichspannungszwischenkreis ein. Zudem ist ein Akkumulatorblock vorgesehen, der einen Zwischenspeicher bildet. Darüberhinaus ist ein Kondensatorblock vorgesehen, welcher ebenfalls als Zwischenspeicher verwendbar ist. Akkumulatorblock und Kondensatorblock sind über Lade/Entladeschaltungen an den Gleichspannungszwischenkreis angeschlossen. Der Gleichspannungszwischenkreis ist mit einer oder mit einer Mehrzahl von parallel geschalteten Wechselrichtern abgeschlossen. Die elektrische Leistung der Primärenergieerzeuger kann zum Betrieb eines Pumpspeicherwerks genutzt werden.

Die DE 26 23 659 A1 betrifft ein Pumpspeicherwerk, bei welchem mehrere Motor-Generatoren installiert sind, an die jeweils direkt Pumpturbinen gekuppelt sind. Darüber hinaus wird ein Anlassverfahren für die Motor-Generatoren vorgeschlagen. Zu diesem Zweck ist an den Motor-Generator direkt eine Schleifringläufer-Asynchronmaschine gekuppelt. Die Schleifringläufer-Asynchronmaschine weist als Zusatz eine Feldregelvorrichtung mit veränderlichen Frequenzen auf, wobei die Schleifringläufer-Asynchronmaschine als Anlassmotor für den mit ihr gekuppelten Motor-Generator angelassen wird.

In der EP 1 523 088 A2 und US 2010/133816 A1 sind in einem anderen Zusammenhang Frequenzumrichtereinheiten beschrieben.

Aus der EP 0 200 081 A2 ist ein Pumpspeicherkraftwerk mit einer andersartigen Pumpturbine bekannt. Die Pumpturbine ist mit einer Motor-Generator-Maschine verbunden. Die Drehzahl der Motor-Generator-Maschine kann mittels einer Umrichtereinheit in einem begrenzten Bereich um die Synchrondrehzahl geregelt werden, um die für den Generator- bzw. Pumpbetrieb optimalen Drehzahlen abzudecken. In diesem Zusammenhang wird eine Umrichtereinheit mit mehreren Umrichtern vorgesehen, welche im Generatorbetrieb parallel und im Motorbetrieb in Serie geschaltet werden.

In der EP 1 130 764 A2 ist eine andersartige Kraftwerksanlage mit gleichartigen Untereinheiten beschrieben.

Demzufolge besteht die Aufgabe der vorliegenden Erfindung darin, eine kompakte, variabel dimensionierbare Pumpspeicheranlage der eingangs angeführten Art zu schaffen, welche mit geringen Mehrkosten eine Drehzahlsteuerung bzw. -regelung der Motor-Generator-Maschine über einen weiten Regelbereich ermöglicht. Der Gegenstand der Erfindung wird durch den unabhängigen Anspruch 1 definiert.

Diese Aufgabe wird bei der Pumpspeicheranlage der eingangs angeführten Art dadurch gelöst, dass die Frequenzumrichtereinheit einen modularen Aufbau mit einer Mehrzahl von parallelgeschalteten Frequenzumrichtern aufweist.

Durch den modularen Aufbau der Frequenzumrichtereinheit können für die Frequenzumrichter vorteilhafterweise Standardkomponenten eingesetzt werden, welche sich durch niedrige Kosten und geringe Komplexität auszeichnen. Die Frequenzumrichter sind in Parallelschaltung zusammengeschaltet, so dass die Leistung der einzelnen Frequenzumrichter aufaddiert wird. Somit kann auf eine Verwendung von teuren, speziell an die jeweilige Pumpspeicheranlage anzupassenden Hochleistungs-Komponenten verzichtet werden. Die Modulbauweise der Frequenzumrichtereinheit trägt zudem zur Skalierbarkeit der Pumpspeicheranlage bei. In Abhängigkeit von den jeweiligen Randbedingungen wird eine Frequenzumrichtereinheit mit einer passenden Anzahl von parallelgeschalteten Frequenzumrichtern vorgesehen, welche eine Drehzahlvariabilität im vorgegebenen Regelbereich ermöglicht. Hierdurch können die maßgeblichen Parameter der Pumpspeicheranlage (Speichervolumen, Fallhöhe, etc.) gezielt berücksichtigt werden. Aufgrund der Drehzahlvariabilität der Motor-Generator-Maschine kann die Anlage sowohl im Pump- als auch im Turbinenbetrieb am optimalen Arbeitspunkt betrieben werden, wodurch der Wirkungsgrad gesteigert wird. Von besonderem Vorteil ist die Drehzahlregelung beim Umschalten zwischen Pump- und Turbinenbetrieb, da bei einer ungeregelten Betriebsweise auftretende Laststöße und Vibrationen beträchtlich reduziert werden können. Im Turbinenbetrieb ermöglicht die Drehzahlvariabilität eine Erweiterung des Einsatzbereichs. Zudem kann bei gleicher Fallhöhe eine größere Leistung erzielt werden. Weiters wird ein gleichmäßiger Kennlinienverlauf erhalten. Darüber hinaus kann eine Veränderung der Speicherhöhe effizient ausgeglichen werden. Im Pumpbetrieb bewirkt die Drehzahlvariabilität der Motor-Generator-Maschine ein verbessertes Regelverhalten. Demnach kann die drehzahlgeregelte Motor-Generator-Maschine stets am geeigneten Arbeitspunkt betrieben werden, der je nach Betriebsmodus (Pump- oder Turbinenbetrieb), Auslastung (Voll- oder Teillastbetrieb) und gegebener Stauhöhe laufend angepasst wird. Die mehrstufige Bauweise der Pumpturbine hat andererseits den Vorteil, dass größere Förder- bzw. Fallhöhen umsetzbar sind. Zudem wird eine kompakte Bauweise ermöglicht, da der Durchmesser des Laufrads der Pumpturbine gegenüber einer einstufigen Ausführung deutlich verkleinert werden kann. Durch den verringerten Raumbedarf kann zudem die Handhabung des Maschinensatzes beim Aufbau vereinfacht werden; weiters können die Kosten für die Herstellung und Montage der Pumpturbine reduziert werden. Die Modulbauweise von Frequenzumrichtereinheit und Pumpturbine bildet daher die Grundlage für eine Produktion der Pumpspeicheranlage in Kleinserie, wodurch insbesondere auch die Errichtung kleinerer, dezentraler Pumpspeicheranlagen wirtschaftlich rentabel wird.

Zur Anpassung der Motor-Generator-Maschine an einen vorgegebenen Leistungsbereich ist es günstig, dass die Motor-Generator-Maschine aus einzelnen, hintereinander geschalteten Motor-Generator-Modulen aufgebaut ist. Die Vorteile einer solchen Modulbauweise liegen einerseits in einer Verringerung der Herstellungskosten durch Verwendung von Standardkomponenten. Zudem kann der Leistungsbereich der Motor-Generator-Maschine durch Hinzufügen bzw. Entfernen einzelner Module gezielt an das gewünschte Leistungsspektrum, welches beispielsweise vom Speichervolumen und der Fallhöhe eines bestimmten Kraftwerks abhängt, angepasst werden. Die Motor-Generator-Maschine, zweckmäßigerweise eine Drehfeldmaschine, kann aus einer variablen Anzahl einzelner Stator- bzw. Rotorscheiben aufgebaut sein, welche modulartig verbunden sind. Um die Variabilität der Pumpspeicheranlage zu verbessern, kann die Welle der Pumpturbine verlängert sein, so dass Platz für zusätzliche Motor-Generator-Module geschaffen wird.

Bei der Erfindung ist vorgesehen, dass jeder Frequenzumrichter mit genau einem Motor-Generator-Modul der Motor-Generator-Maschine verbunden ist. Demnach wird jedem Modul der Motor-Generator-Maschine ein eigener Frequenzumrichter zugeordnet. Die einzelnen Frequenzumrichter, ebenso wie die Module der Motor-Generator-Maschine, weisen zweckmäßigerweise ein im Wesentlichen identes Leistungsspektrum auf. Die Module der Motor-Generator-Maschine sind vorzugsweise durch einzelne Wicklungssysteme einer Drehfeldmaschine gegeben, die jeweils über einen eigenen Anschluss mit den zugehörigen Frequenzumrichtern verbunden sind.

Um die Drehzahl der Motor-Generator-Maschine mit standardmäßig verfügbaren Frequenzumrichtern über einen großen Drehzahlbereich steuern bzw. regeln zu können, ist es günstig, wenn die Frequenzumrichtereinheit eine Mehrzahl insbesondere identer Frequenzumrichter mit einer Leistung von jeweils zwischen 0,5 Megawatt und 5 Megawatt aufweist. Die Leistungselektronik der Frequenzumrichter weist, nach heutigem Stand der Technik, insbesondere einen IGBT (Insulated-Gate Bipolar Transistor, Bipolartransistor mit isolierter Gate-Elektrode) oder einen Thyristor auf.

Zur optimalen Energieumwandlung im Turbinen- bzw. Pumpbetrieb ist es von Vorteil, wenn die Frequenzumrichtereinheit zur Steuerung bzw. Regelung der Drehzahl der Motor-Generator-Maschine in einem Bereich zwischen im Wesentlichen 0% und 110%, vorzugsweise 100%, im Verhältnis zur Nenndrehzahl der Pumpturbine, eingerichtet ist. Die bevorzugte Ausführung mit einer im Wesentlichen stufenlos zwischen Stillstand und zumindest der Nenndrehzahl der Pumpturbine steuer- bzw. regelbaren Motor-Generator-Maschine benötigt einen sogenannten "full-scale"-Umrichter, welcher die vollständige Bemessungsleistung der Motor-Generator-Maschine durch die Leistungselektronik zu- bzw. abführen kann; hierfür wird die modular aufgebaute Frequenzumrichtereinheit mit einer entsprechenden Anzahl von parallelgeschalteten Frequenzumrichtern ausgestattet.

Im Hinblick auf den bevorzugten Einsatz der Pumpspeicheranlage als dezentrales Kraftwerk ist es günstig, wenn die Motor-Generator-Maschine eine Leistung von zwischen 0,5 Megawatt und 75 Megawatt, vorzugsweise zwischen 5 Megawatt und 15 Megawatt, aufweist. Das Leistungsspektrum der Pumpspeicheranlage liegt somit deutlich unter jenen von konventionellen Pumpturbinen. Der modulare Aufbau von Frequenzumrichtereinheit und Pumpturbine, vorzugsweise auch der Motor-Generator-Maschine, mit einzelnen, variabel verbindbaren Grundelementen ermöglicht einen effizienten Betrieb im bevorzugten Leistungsbereich von 5 Megawatt bis 15 Megawatt, welcher derzeit aufgrund der hohen Maschinenkosten und der speziellen Anforderungen nicht bzw. lediglich in geringem Ausmaß abgedeckt wird.

Zur Erzielung der bevorzugten Leistung mit einer Motor-Generator-Maschine in Modulbauweise ist es von Vorteil, wenn die Motor-Generator-Maschine zwischen 1 und 5 Motor-Generator-Module mit einer Gesamtleistung von bis zu 75 Megawatt aufweist. Jedes Motor-Generator-Modul weist vorzugsweise eine Leistung von zwischen 0,5 Megawatt und 15 Megawatt auf.

Eine bevorzugte Ausführungsform der Pumpspeicheranlage sieht als Motor-Generator-Maschine eine Synchronmaschine, insbesondere mit Permanentmagneterregung, vor. Hierfür wird zweckmäßigerweise eine Radialflussmaschine mit Permanentmagnetrotor verwendet, die vorzugsweise in einem Drehzahlbereich um 1000 Umdrehungen pro Minute arbeitet. Die Radialflussmaschine ist vorzugsweise in Modulbauweise mit einzelnen Rotor- bzw. Statorscheiben ausgeführt, deren Anzahl sich nach der vorgegebenen Gesamtleistung der Motor-Generator-Maschine richtet. Die Rotor- bzw. Statorscheiben können einzeln hinzugefügt bzw. entfernt werden, um die Gesamtleistung der Rotor-Generator-Maschine anzupassen. Zum effizienten Betrieb von Pumpspeicheranlagen mit großen Fallhöhen und kleinen Durchflüssen ist es günstig, wenn als Pumpturbine eine Francis-Maschine vorgesehen ist. Indem die Vorteile einer drehzahlregelbaren Motor-Generator-Maschine mit den Vorteilen der mehrstufigen Bauweise der Pumpturbine kombiniert werden, kann die Pumpspeicheranlage am unteren Randbereich der Schnellläufigkeit (große Fallhöhen bei geringem Durchfluss) wirtschaftlich betrieben werden.

Die Erfindung wird nachstehend anhand von in den Figuren dargestellten Ausführungsbeispielen noch weiter erläutert.

Im Einzelnen zeigen in der Zeichnung:
Fig. 1 eine schematische Ansicht eines Pumpspeicherkraftwerks mit einem Ober- und einem Unterwasserbecken, und mit einer Pumpspeicheranlage, die eine mit einer Motor-Generator-Maschine verbundene mehrstufige Pumpturbine aufweist;
Fig. 2 eine schematische Ansicht zum Aufbau der Pumpspeicheranlage gemäß Fig. 1, wobei die Motor-Generator-Maschine mit einer modular aufgebauten Frequenzumrichtereinheit zur Drehzahlsteuerung der Motor-Generator-Maschine verbunden ist;
Fig. 3a schematisch eine erste Ausführungsform zur Verbindung der modular aufgebauten Frequenzumrichtereinheit mit der Motor-Generator-Maschine; und
Fig. 3b schematisch eine weitere Ausführungsform zur Verbindung der Frequenzumrichtereinheit mit der Motor-Generator-Maschine.

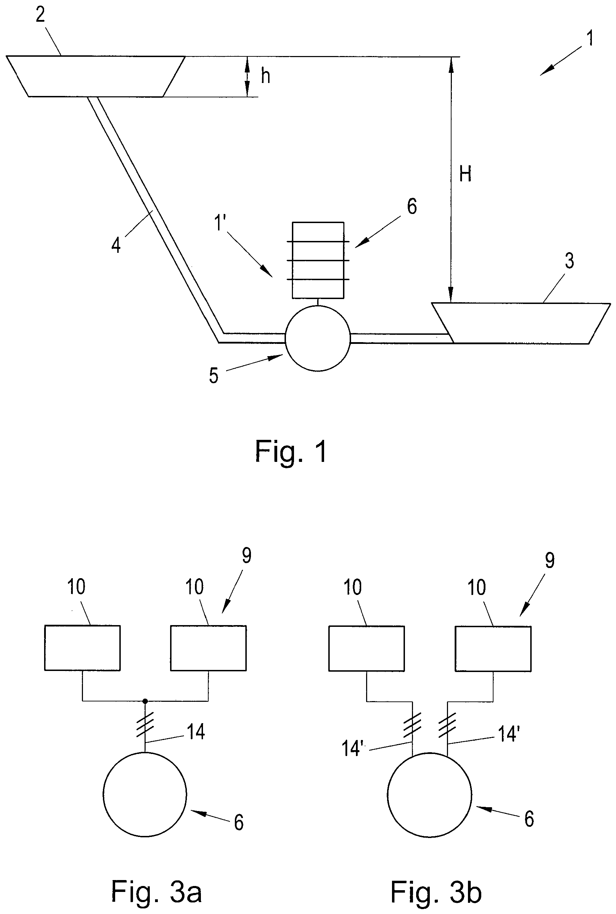

In Fig. 1 ist schematisch ein Pumpspeicherkraftwerk 1 gezeigt, welches ein Oberwasserbecken 2 mit einer Stauhöhe h und ein Unterwasserbecken 3 aufweist, die über eine Druckleitung 4 mit einer Fallhöhe H miteinander verbunden sind. Das Pumpspeicherkraftwerk 1 dient zur Energiespeicherung, indem Wasser durch die Druckleitung 4 vom Unterwasserbecken 3 in das Oberwasserbecken 2 gepumpt wird. Zur Rückgewinnung der elektrischen Energie wird Wasser vom Oberwasserbecken 2 über eine Turbine abgearbeitet, um einen Generator anzutreiben. Somit ist ein reversibler Anlagenbetrieb erforderlich, welcher bei der gezeigten Ausführungsform durch eine Pumpspeicheranlage 1' mit einer Pumpturbine 5 erzielt wird, die zwischen einem Pumpbetrieb und einem Turbinenbetrieb umschaltbar ist. Bei der Pumpturbine 5 handelt es sich um eine Strömungsmaschine, die in beiden Richtungen durchströmt werden kann und je nach Strömungsrichtung als Pumpe bzw. Turbine arbeitet. Die Pumpturbine 5 ersetzt somit einen Maschinensatz mit getrennter Pump- bzw. Turbineneinrichtung. Die Fähigkeit der Pumpspeicheranlage 1', gezielt elektrische Energie aufzunehmen bzw. abzugeben, wird zur Regelung des Stromnetzes genutzt, um Spitzenlasten und Verbrauchseinbrüche auszugleichen. Zur Umwandlung der Strömungsenergie ist die Pumpturbine 5 mit einer Motor-Generator-Maschine 6 verbunden, welche im Pumpbetrieb als Motor und im Turbinenbetrieb als Generator arbeitet. Als Motor-Generator-Maschine 6 ist vorzugsweise eine Synchronmaschine mit Permanentmagneterregung (Radialflussmaschine) vorgesehen.

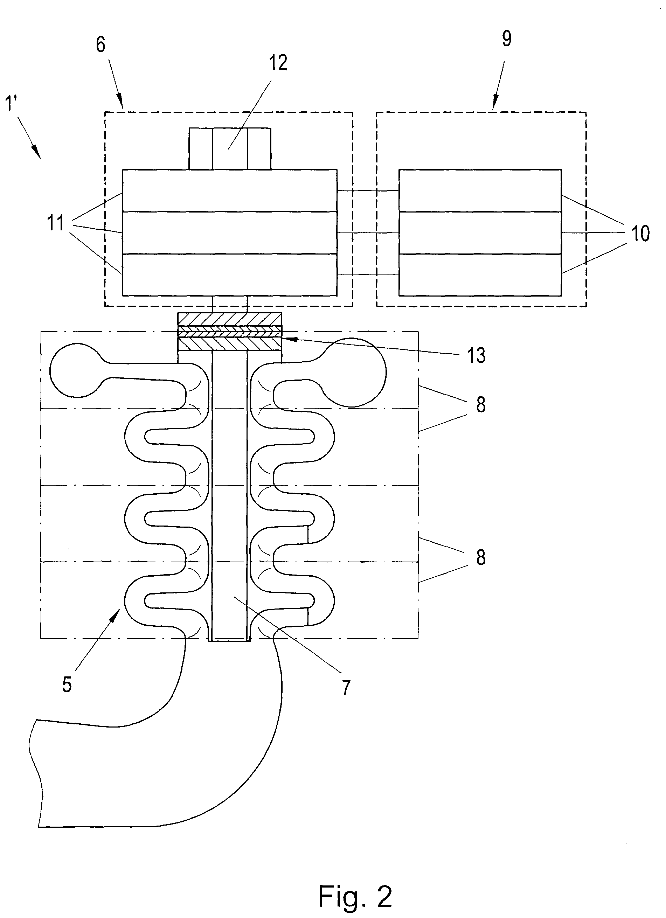

In Fig. 2 ist eine schematische Ansicht der Pumpspeicheranlage 1' gezeigt. Die Pumpturbine 5 weist mehrere (im gezeigten Beispiel vier) in Strömungsrichtung aneinander anschließende, an einer gemeinsamen, senkrecht angeordneten Welle 7 arbeitenden Pumpstufen bzw. Pumpturbinenmodule 8 auf. Die Anzahl der Pumpturbinenmodule 8 richtet sich nach der gewünschten Leistung bzw. der zu überwindenden Stau- bzw. Fallhöhe. Zum (an sich bekannten) Aufbau der Pumpturbine 5 wird auf die eingangs angeführte AT 319 868 verwiesen, welche eine bevorzugte Ausführung der Pumpturbine 5 in der Art einer Francis-Maschine zeigt.

Es wurden bereits Pumpspeicherkraftwerke 1 errichtet, welche eine drehzahlgeregelte Motor-Generator-Maschine 6 aufweisen, um die unterschiedlichen Anforderungen im Pumpbetrieb bzw. im Turbinenbetrieb der Pumpturbine 5 zu berücksichtigen. Hierfür ist die Motor-Generator-Maschine 6 mit einer Frequenzumrichtereinheit 9 verbunden. Die erzielbare Drehzahlvariabilität wird durch die Leistung der verwendeten Frequenzumrichtereinheit 9 bestimmt, welche einen entsprechenden Anteil der Leistung der Motor-Generator-Maschine 6 aufnimmt bzw. abgibt. Um die Drehzahl der Motor-Generator-Maschine 6 über einen vergleichsweise großen Drehzahlbereich regeln bzw. steuern zu können, könnte grundsätzlich eine speziell angepasste Hochleistungs-Frequenzumrichtereinheit 9 zum Einsatz kommen, welche das geforderte Leistungsspektrum aufweist. Abgesehen von den wesentlich höheren Baukosten müssten jedoch aufwendige Adaptierungen der Frequenzumrichtereinheit 9 durchgeführt werden, welche für einen Einsatz bei kleineren, dezentralen Pumpspeicheranlagen 1' nicht zu rechtfertigen wären.

Demgegenüber weist die Frequenzumrichtereinheit 9 der gezeigten Ausführung einen modularen Aufbau mit einer Mehrzahl von parallelgeschalteten Frequenzumrichtern 10 auf. Die zur Erzielung der Drehzahlvariabilität notwendige Leistung wird daher auf einzelne Frequenzumrichter 10 aufgeteilt, an die somit geringere Leistungsanforderungen gestellt werden. Die Frequenzumrichter 10 sind in Parallelschaltung angeordnet, so dass die Leistung der einzelnen Frequenzumrichter 10 aufaddiert wird. Somit können für die Frequenzumrichter 10 kostengünstige Standardkomponenten verwendet werden, die eine Leistung von jeweils bis zu ca. 5 Megawatt, nach heutigem Stand der Technik, aufweisen können. Zur Erzielung eines optimalen Wirkungsgrads im Pump- bzw. im Turbinenbetrieb der Pumpturbine 5 ist die Drehzahl der Motor-Generator-Maschine 6 bevorzugt zwischen 0% und 110% der Nenndrehzahl der Pumpturbine einstellbar, wofür die Frequenzumrichtereinheit 9 die gesamte Leistung der Motor-Generator-Maschine 6 aufbringen muss. Für eine Leistung der Motor-Generator-Maschine 6 von beispielsweise 10 Megawatt sind hierfür, je nach Leistungsklasse, 2 bis 5 Frequenzumrichter 10 erforderlich.

Wie aus Fig. 2 weiters ersichtlich, ist die Motor-Generator-Maschine 6 in Modulbauweise aus einzelnen, hintereinander geschalteten Motor-Generator-Modulen 11 aufgebaut. Die Module 11 sitzen auf einer Motorwelle 12, welche über eine starre mechanische Kupplung 13, beispielsweise eine Flanschkupplung, mit der Welle 7 der Pumpturbine 5 verbunden ist. Die gezeigte Ausführung der Pumpspeicheranlage 1' kann somit auf einfache Weise an die Rahmenbedingungen des Einsatzortes angepasst werden, indem je nach geforderter Gesamtleistung der Pumpspeicheranlage 1' eine entsprechende Anzahl von Motor-Generator-Modulen 11 eingesetzt wird, die jeweils eine Leistung von vorzugsweise 5 Megawatt aufbringen.

In den Fig. 3a, 3b ist jeweils eine bevorzugte Ausführungsform zur Verbindung der Frequenzumrichtereinheit 9 mit der Motor-Generator-Maschine 6 gezeigt.

Gemäß der Ausführungsform von Fig. 3a erfolgt eine Parallelschaltung von beispielsweise zwei Frequenzumrichtern 10 gleicher Leistung direkt außerhalb der Motor-Generator-Maschine 6. Die Frequenzumrichtereinheit 9 weist eine gemeinsame Anschlussleitung 14 auf, welche an das Wicklungssystem der Motor-Generator-Maschine 6 angeschlossen ist. Bei dieser Ausführung kann somit die Motor-Generator-Maschine 6 durch ein einziges Modul 11 gebildet sein.

Gemäß der Ausführungsform von Fig. 3b weist die Motor-Generator-Maschine 6 eine der Anzahl der Frequenzumrichter 10 entsprechende Anzahl von parallelgeschalteten Motor-Generator-Modulen 11 auf, wobei jedes Motor-Generator-Modul 11 über eine eigene Leitung 14' mit jeweils einem Frequenzumrichter 10 verbunden ist.

Bei Radialflussmaschinen ist eine Skalierung der Leistung beispielsweise durch Erhöhung der axialen Rotorabmessungen möglich. Die damit verbundene Erhöhung der induzierten Spannung bei gleicher Windungszahl und Drehzahl kann durch Umschaltung der Wicklungszweige von seriell auf parallel kompensiert werden. Jeder dieser parallelen Wicklungszweige kann mit einem eigenen Frequenzumrichter 10 verbunden werden.

## Patentansprüche

1. Pumpspeicheranlage (1') mit einer zwischen einem Pumpbetrieb und einem Turbinenbetrieb umschaltbaren Pumpturbine (5), die mehrere in Strömungsrichtung aneinander anschließende, mit einer gemeinsamen Welle (7) verbundene Pumpturbinenmodule (8) aufweist, und mit einer mit der Welle (7) gekoppelten Motor-Generator-Maschine (6), die mit einer Frequenzumrichtereinheit (9) zur Drehzahlsteuerung bzw. -regelung der Motor-Generator-Maschine (6) verbunden ist, wobei die Frequenzumrichtereinheit (9) einen modularen Aufbau mit einer Mehrzahl von parallelgeschalteten Frequenzumrichtern (10) aufweist, wobei die Mehrzahl größer als oder gleich zwei ist, wobei die Frequenzumrichtereinheit (9; eine Drehzahlvariabilität in einem Regelbereich ermöglicht, sodass die Pumpspeicheranlage (1') sowohl im Pump- als auch im Turbinenbetrieb im optimalen Arbeitspunkt betrieben werden kann, wobei die Motor-Generator-Maschine (6) aus einzelnen, hintereinander geschalteten Motor-Generator-Modulen (11) aufgebaut ist, wobei jeder Frequenzumrichter (10) mit genau einem Motor-Generator-Modul (11) der Motor-Generator-Maschine (6) verbunden ist, **dadurch gekennzeichnet, dass** die Motor-Generator-Module (11) auf einer gemeinsamen Motorwelle (12) sitzen, welche über eine starre mechanische Kupplung (13) mit der Welle (7) der Pumpturbine (5) verbunden ist.

2. Pumpspeicheranlage (1') nach Anspruch 1, **dadurch gekennzeichnet, dass** die Frequenzumrichtereinheit (9) eine Mehrzahl insbesondere identer Frequenzumrichter (10) mit einer Leistung von jeweils zwischen 0,5 Megawatt und 5 Megawatt aufweist.

3. Pumpspeicheranlage (1') nach einem der Anspruch 1 oder 2, **dadurch gekennzeichnet, dass** die Frequenzumrichtereinheit (9) zur Steuerung bzw. Regelung der Drehzahl der Motor-Generator-Maschine (6) in einem Bereich zwischen 0% und 110%, vorzugsweise 100%, im Verhältnis zur Nenndrehzahl der Pumpturbine (5), eingerichtet ist.

4. Pumpspeicheranlage (1') nach einem der Ansprüche 1 bis 3, **dadurch gekennzeichnet, dass** die Motor-Generator-Maschine (6) eine Leistung von zwischen 0,5 Megawatt und 75 Megawatt, vorzugsweise zwischen 5 Megawatt und 15 Megawatt, aufweist.

5. Pumpspeicheranlage (1') nach Anspruch 4, **dadurch gekennzeichnet, dass** die Motor-Generator-Maschine (6) zwischen 1 und 5 Motor-Generator-Module (10) mit einer Gesamtleistung von bis zu 75 Megawatt aufweist.

6. Pumpspeicheranlage (1') nach einem der Ansprüche 1 bis 5, **dadurch gekennzeichnet, dass** als Motor-Generator-Maschine (6) eine Synchronmaschine, insbesondere mit Permanentmagneterregung, vorgesehen ist, die vorzugsweise mit einer Pumpturbine (5) in Form einer Francis-Maschine gekoppelt ist.

## Claims

1. Pumped-storage system (1'), comprising a pump-turbine (5) which can be switched between pump mode and turbine mode and which has a plurality of pump-turbine modules (8) which adjoin one another in the flow direction and are connected to a common shaft (7), and comprising a motor-generator machine (6) which is coupled to the shaft (7) and is connected to a variable-frequency drive unit (9) for open-loop or closed-loop control of the speed of the motor-generator machine (6), the variable-frequency drive unit (9) having a modular structure comprising a plurality of variable-frequency drives (10) connected in parallel, the plurality being greater than or equal to two, the variable-frequency drive unit (9) allowing speed variability in a control range such that the pumped-storage system (1') can be operated at the optimum working point in both pump mode and turbine mode, the motor-generator machine (6) being made up of individual motor-generator modules (11) connected in series, each variable-frequency drive (10) being connected to precisely one motor-generator module (11) of the motor-generator machine (6), **characterised in that** the motor-generator modules (11) are mounted on a common motor shaft (12) which is connected to the shaft (7) of the pump-turbine (5) via a rigid mechanical coupling (13).

2. Pumped-storage system (1') according to claim 1, **characterised in that** the variable-frequency drive unit (9) has a plurality of in particular identical variable-frequency drives (10), each having an output of between 0.5 megawatts and 5 megawatts.

3. Pumped-storage system (1') according to either claim 1 or claim 2, **characterised in that** the variable-frequency drive unit (9) is designed for open-loop or closed-loop control of the speed of the motor-generator machine (6) in a range of between 0% and 110%, preferably 100%, in relation to the nominal speed of the pump-turbine (5).

4. Pumped-storage system (1') according to any of claims 1 to 3, **characterised in that** the motor-generator machine (6) has an output of between 0.5 megawatts and 75 megawatts, preferably between 5 megawatts and 15 megawatts.

5. Pumped-storage system (1') according to claim 4, **characterised in that** the motor-generator machine (6) has between 1 and 5 motor-generator modules (10) having a total output of up to 75 megawatts.

6. Pumped-storage system (1') according to any of claims 1 to 5, **characterised in that** a synchronous machine, in particular having permanent-magnet excitation, is provided as the motor-generator machine (6), which synchronous machine is preferably coupled to a pump-turbine (5) in the form of a Francis turbine.

## Revendications

1. Système d'accumulation par pompage (1') comprenant une turbine-pompe (5) pouvant basculer entre un mode de pompage et un mode de turbinage, laquelle présente plusieurs modules de turbine-pompe (8) disposés les uns à la suite des autres dans le sens d'écoulement et reliés à un arbre (7) commun, et une machine moteur-générateur (6) couplée à l'arbre (7) et reliée à une unité de conversion de fréquence (9) destinée à commander ou réguler la vitesse de rotation de la machine moteur-générateur (6), dans lequel l'unité de conversion de fréquence (9) présente une structure modulaire comportant une pluralité de convertisseurs de fréquence (10) montés en parallèle, dans lequel la pluralité de convertisseurs de fréquence (10) est supérieure ou égale à deux, dans lequel l'unité de conversion de fréquence (9)
permet de faire varier la vitesse de rotation dans une plage de réglage, de sorte que le système d'accumulation par pompage (1') peut être exploité au point de fonctionnement optimal aussi bien en mode de pompage qu'en mode de turbinage, dans lequel la machine moteur-générateur (6) est constituée de modules de moteur-générateur (11) individuels montés les uns derrières les autres, dans lequel chaque convertisseur de fréquence (10) est relié à exactement un module de moteur-générateur (11) de la machine moteur-générateur (6),
**caractérisé**
**en ce que** les modules de moteur-générateur (11) sont montés sur un arbre moteur commun (12) relié à l'arbre (7) de la turbine-pompe (5) par accouplement mécanique rigide (13).

2. Système d'accumulation par pompage (1') selon la revendication 1, **caractérisé en ce que** l'unité de conversion de fréquence (9) comporte une pluralité de convertisseurs de fréquence (10), notamment identiques, présentant chacun une puissance comprise entre 0,5 mégawatt et 5 mégawatts.

3. Système d'accumulation par pompage (1') selon l'une des revendications 1 et 2, **caractérisé en ce que** l'unité de conversion de fréquence (9) est conçue pour commander ou réguler la vitesse de rotation de la machine moteur-générateur (6) dans une plage comprise entre 0 % et 110 %, de préférence 100 %, par rapport à la vitesse de rotation nominale de la turbine-pompe (5).

4. Système d'accumulation par pompage (1') selon l'une des revendications 1 à 3, **caractérisé en ce que** la machine moteur-générateur (6) présente une puissance comprise entre 0,5 mégawatt et 75 mégawatts, de préférence entre 5 mégawatts et 15 mégawatts.

5. Système d'accumulation par pompage (1') selon la revendication 4, **caractérisé en ce que** la machine moteur-générateur (6) comporte entre 1 et 5 modules de moteur-générateur (10) ayant une puissance totale pouvant aller jusqu'à 75 mégawatts.

6. Système d'accumulation par pompage (1') selon l'une des revendications 1 à 5, **caractérisé en ce que** la machine moteur-générateur (6) est une machine synchrone, notamment à excitation par aimant permanent, couplée de préférence à une turbine-pompe (5) sous la forme d'une turbine Francis.
